# EUROPÄISCHE PATENTSCHRIFT

(11) **EP 2 383 080 B1**
(45) Veröffentlichungstag und Bekanntmachung des Hinweises auf die Patenterteilung: **05.06.2013**
(21) Anmeldenummer: 11162236.1
(22) Anmeldetag: 13.04.2011
(51) Int. Cl.: B25J 15/00

(54) **Robotergreifer und Handhabungsroboter**
Robot gripper and handling robot
Préhenseur pour robot et robot de manipulation

(30) Priorität: 28.04.2010 DE 102010018966
(43) Veröffentlichungstag der Anmeldung: 02.11.2011
(73) Patentinhaber: IPR-Intelligente Peripherien für Roboter GmbH, 74193 Schwaigern (DE)
(72) Erfinder: Ehrenleitner Franz, 72213 Altensteig-Walddorf (DE)
(74) Vertreter: Patentanwälte Ruff, Wilhelm, Beier, Dauster & Partner

(56) Entgegenhaltungen:
- DE-A1- 10 012 090
- DE-A1-102005 022 828
- US-A- 6 082 797

## Beschreibung

### Anwendungsgebiet und Stand der Technik

Die Erfindung betrifft einen Robotergreifer zum Ergreifen, Transportieren und Ablegen von Transportgütern, insbesondere von Gepäckstücken wir Koffern und Reisetaschen, nach dem Oberbegriff von Anspruch 1.

Ein gattungsgemäßer Robotergreifer, wie er aus der DE 10 2005 022 828 A1 bekannt ist, weist eine Greiferbasis auf, an der eine Kopplungseinrichtung zur Anbringung des Robotergreifers an einem Roboterarm vorgesehen ist. Ein gattungsgemäßer Robotergreifer weist weiterhin eine Trageinrichtung mit einer Auflagefläche auf, die der Auflage des Transportes dient und die sich im Wesentlichen in Greiferlängsrichtung und in einer Greiferquerrichtung erstreckt. Auf dieser Trageinrichtung, die im Betrieb zumeist im Wesentlichen horizontal ausgerichtet ist, liegt das Transportgut während des Transportes durch den Robotergreifer auf. Weiterhin weist ein gattungsgemäßer Robotergreifer eine Verlagerungseinrichtung auf, die in einer Greiferhochrichtung oberhalb der Trageinrichtung angeordnet ist und die der Kraftbeaufschlagung des Transportgutes in Greiferlängsrichtung dient.

Der gattungsgemäße Robotergreifer gestattet es durch die Verlagerungseinrichtung, ein auf der Auflagefläche der Trageinrichtung aufliegendes Transportgut von dieser zu entfernen, indem eine Relativbewegung zwischen Trageinrichtung und Verlagerungseinrichtung in Greiferlängsrichtung erfolgt, durch die das Transportgut von der Auflagefläche heruntergeschoben wird und so beispielsweise auf einem Untergrund, insbesondere beispielsweise eines Frachtcontainers, platziert werden kann.

Bei der Konzeption eines gattungsgemäßen Robotergreifers besteht das Problem, dass zur Aufnahme und Ablage von üblichen Gepäckstücken die Auflagefläche eine erhebliche Länge in Greiferlängsrichtung aufweisen muss, vorzugsweise eine Länge von mehr als 40 cm. Um das Transportgut zuverlässig von der Auflagefläche entfernen zu können, muss daher die Relativverlagerbarkeit zwischen Verlagerungseinrichtung und Trageinrichtung ähnlich groß sein. Um dies bei einem vergleichsweise kleinen und leichten Robotergreifer erzielen zu können, ist es entweder erforderlich, Teile der Antriebsmechanik zur Relativverlagerung der Verlagerungseinrichtung und der Trageinrichtung zumindest phasenweise in Greiferlängsrichtung bis hinter die Kopplungseinrichtung zu verfahren, so dass dort eine Kollision mit dem Roboterarm zu befürchten wäre, oder es kann ein Teleskopmechanismus, wie beispielsweise eine Teleskopspindel oder eine teleskopierbare Trageinrichtung, Anwendung finden. Diese sind jedoch recht teuer und/oder fehleranfällig. Zudem sind bei ausreichender Stabilität derartige teleskopierbare Einrichtungen häufig vergleichsweise schwer.

### Aufgabe und Lösung

Aufgabe der Erfindung ist es daher, ein gattungsgemäßen Robotergreifer dahingehend weiterzubilden, dass dieser bei einem einfachen und möglichst leichten Aufbau die erforderliche Relativverlagerbarkeit zwischen Verlagerungseinrichtung und Trageinrichtung gestattet.

Erfindungsgemäß wird dies dadurch erreicht, dass die Verlagerungseinrichtung und die Trageinrichtung dafür ausgebildet sind, zeitgleich ohne entgegengesetzter Richtung gegenüber der Greiferbasis verfahren zu werden, wobei hierfür ein Getriebe vorgesehen ist, mittels dessen eine mechanische Zwangskopplung zwischen der Bewegung der Verlagerungseinrichtung gegenüber der Greiferbasis einerseits und der bewegenden Trageinrichtung gegenüber der Greiferbasis andererseits bewirkt wird.

Diese Gestaltung gestattet es, die jeweilige maximale Beweglichkeit gegenüber der Greiferbasis gering zu halten, da die maximale Relativverlagerbarkeit der Trageinrichtung und der Verlagerungseinrichtung gegeneinander sich aus der Summe der Verlagerbarkeit der Trageinrichtung einerseits und der Verlagerungseinrichtung andererseits gegenüber der Greiferbasis ergibt. Somit kann ein kompakter Robotergreifer erzielt werden, dessen Teilkomponenten in vergleichsweise geringem Maße gegenüber der Greiferbasis verlagerbar sein müssen. Vorzugweise sind die Trageinrichtung und die Verlagerungseinrichtung etwa gleich weit gegenüber der Roboterbasis verlagerbar, um einen besonders kompakten Aufbau des Robotergreifers zu erzielen. Auch ein Verhältnis der Verlagerbarkeit von 2:1 wird noch als sehr vorteilhaft angesehen.

Die Verlagerungseinrichtung und die Trageinrichtung begrenzen gemeinsam den Aufnahmebereich für das durch beide zu führendes Transportgut, wobei die Verlagerungseinrichtung den Aufnahmebereich in Greiferlängsrichtung nach hinten begrenzt und die Trageinrichtung den Aufnahmebereich unterseitig begrenzt. Der für das aufliegende Transportgut nutzbare Teil des Aufnahmebereichs wird somit durch die Lage der Trageinrichtung und die Lage der Verlagerungseinrichtung bestimmt, wobei erst das erfindungsgemäße Zusammenwirken eine Reduzierung dieses nutzbaren Bereichs auf ein Minimum gestattet.

Vorzugsweise sind am erfindungsgemäßen Greifer keinerlei Teilabschnitte gegeben, die sich oberhalb der Verlagerungseinrichtung bis in diesen Aufnahmebereich erstrecken, so dass ein Transportgut nicht hinsichtlich seiner Höhe begrenzt ist.

Die Verlagerungseinrichtung eines gattungsgemäßen Robotergreifers, die in einer Normalposition oberhalb der Trageinrichtung vorgesehen ist, bildet eine Art Schieber, der das Transportgut seitlich kraftbeaufschlagen kann, um es von der Trageinrichtung herunterzuschieben. Zusätzlich kann es auch vorgesehen sein, dass die Verlagerungseinrichtung, dafür ausgebildet ist, das auf der Trageinrichtung aufliegende Transportgut beispielsweise mittels Unterdruck oder mittels Magnetkraft mit einer in Richtung der Verlagerungseinrichtung wirkenden Kraft zu beaufschlagen, insbesondere um es besser von einem Untergrund aufnehmen zu können und/oder um es auf der Trageinrichtung zusätzlich fixieren zu können.

Ein Kontaktbereich am in Greiferlängsrichtung distalen Ende der Verlagerungseinrichtung, der bestimmungsgemäß mit dem Transportgut in Kontakt kommt, kann Teil einer in sich starren Verlagerungseinrichtung sein. Der Kontaktbereich kann jedoch zusätzlich zu der Verfahrbarkeit in Greiferlängsrichtung gegenüber der Greiferbasis auch zusätzliche Freiheitsgrade aufweisen. Insbesondere kann der Kontaktbereich um eine in Greiferquerrichtung sich erstreckende Schwenkachse an einem lediglich in Greiferlängsrichtung verfahrbaren Hauptabschnitt der Verlagerungseinrichtung angelenkt sein.

Die Trageinrichtung stellt die Auflagefläche für das Transportgut zur Verfügung. Vorzugsweise ist eine Relativbeweglichkeit verschiedener Abschnitte der Auflagefläche zueinander nicht gegeben, insbesondere keine Teleskopierbarkeit in Greiferlängsrichtung. Die Auflagefläche ist stattdessen vorzugsweise vollständig oder weitgehend eben und kann nur als ganzes bewegt werden, um ein problemloses Aufnehmen und Ablegen des Transportgutes zu gestatten. Insbesondere von Vorteil kann es sein, wenn die Trageinrichtung mehrere in Greiferlängsrichtung erstreckte und in Greiferquerrichtung voneinander beabstandete Tragzinken aufweist.

Im Kontext dieses Dokumentes sind die folgenden Begrifflichkeiten wie nachfolgend erläutert zu verstehen. Die "Greiferhochrichtung" ist durch die Flächennormale auf der Auflagefläche der Trageinrichtung definiert. Die "Greiferlängsrichtung" erstreckt sich orthogonal zur Greiferhochrichtung in jener Richtung, in der die Trageinrichtung und die Verlagerungseinrichtung gegeneinander bewegbar sind. Die "Greiferquerrichtung" erstreckt sich orthogonal zur Greiferhochrichtung sowie orthogonal zur Greiferlängsrichtung. "Vorne" bezeichnet eine Richtung ausgehend von der Greiferbasis in Richtung der Greiferlängsrichtung zum distalen Ende der Trageinrichtung. "Hinten" bezeichnet die gegenläufige Richtung. "Oben" und "unten" beziehen sich auf die Normalposition des Robotergreifers, in der die Trageinrichtung horizontal ausgerichtet ist, so dass ein Transportgut auf ihr transportiert werden kann.

Das Getriebe eines erfindungsgemäßen Robotergreifers gestattet es, mit nur einem Motor auszukommen, der beide Relativbewegungen zwangsgekoppelt zueinander bewirkt. Hierdurch ist eine leichtere Bauweise des Robotergreifers erzielbar. Unter einem solchen zwangskoppelnden Getriebe wird auch ein Getriebe aus zwei Teilgetrieben verstanden, die jeweils eine Abtriebswelle eines gemeinsamen Motors mit der Bewegung der Verlagerungseinrichtung einerseits und der Tragenrichtung andererseits koppeln. Das Getriebe kann auf einer hydraulischen oder pneumatischen Kopplung der Trageinrichtung und der Verlagerungseinrichtung beruhen.

Eine besonders vorteilhafte Gestaltung eines solchen Getriebes sieht vor, dass das Getriebe jeweils mindestens ein Antriebsrad für die Verlagerungseinrichtung und die Trageinrichtung aufweist. Diese Antriebsräder sind vorzugsweise als Zahnräder ausgebildet, die jeweils mit einer in Greiferlängsrichtung erstreckten Zahnstange an der Verlagerungseinrichtung einerseits und an der Trageinrichtung andererseits zusammenwirken. Zur Kopplung der Antriebsräder ist vorzugsweise ein Riementrieb vorgesehen, mittels dessen die Antriebsräder miteinander und/oder mit einem gemeinsamen Antriebsmotor gekoppelt sind. Ein solcher Riementrieb stellt eine leichte und preisgünstige Getriebekomponente dar.

Besonders von Vorteil ist es, wenn an der Verlagerungseinrichtung eine Zahnstange vorgesehen ist, deren Verzahnung in Greiferhochrichtung nach oben weist und in die ein über dieser Zahnstange angeordnetes Zahnrad eingreift, während weiterhin an der Unterseite der Trageinrichtung ebenfalls eine Zahnstange vorgesehen ist, deren Verzahnung nach unten weist und in die ein in Greiferhochrichtung unterhalb dieser Zahnstange angeordnetes Zahnrad eingreift. Bei einer derartigen Anordnung können die Antriebsräder beispielsweise durch einen Riementrieb gleichsinnig angetrieben werden und dennoch eine gegenläufige Bewegung der Trageinrichtung und Verlagerungseinrichtung bewirken.

Von besonderem Vorteil ist es, wenn in einer ersten Relativendlage die Verlagerungseinrichtung und die Trageinrichtung zumindest soweit gegeneinander verfahren sind, dass ein distales Ende der Trageinrichtung in Greiferlängsrichtung nicht mehr als 15 cm vor einem distalen Ende der Verlagerungseinrichtung angeordnet ist. Besonders vorteilhaft ist es, wenn die Verlagerungseinrichtung und die Trageinrichtung in diesem Zustand soweit gegeneinander verfahren sind, dass das distale Ende der Verlagerungseinrichtung in Greiferlängsrichtung das distale Ende der Trageinrichtung überragt.

Als erste Relativendlage wird jene Lage verstanden, in der die Verlagerungseinrichtung soweit als möglich von der Greiferbasis aus in Richtung des distalen Endes des Robotergreifers verfahren ist und in der die Trageinrichtung soweit als möglich in entgegengesetzter Richtung verfahren ist. In dieser ersten Relativendlage ist die Länge des vom Transportgut nutzbaren Teils der Auflagefläche der Trageinrichtung vorzugsweise noch maximal 15 cm lang, so dass der Schwerpunkt von Gepäckstücken einer Länge von gut 30 cm üblicherweise nicht mehr über der Auflagefläche liegt, so dass diese Gepäckstücke bestimmungsgemäß von der Auflagefläche herunterkippen oder gleiten können. Durch eine Verlagerbarkeit der Verlagerungseinrichtung noch über das distale Ende der Trageinrichtung hinaus kann besonders zuverlässig Transportgut beliebiger Größe abgeladen werden.

In einer zweiten Relativendlage, die der ersten Relativendlage entgegengesetzt ist und in der die Auflagefläche dementsprechend ihre maximal nutzbare Länge aufweist, beträgt die Länge der Auflagefläche in Greiferlängsrichtung vorzugsweise mindestens 25 cm, insbesondere vorzugsweise mindestens 35 cm und im Idealfall mindestens 45 cm. Somit sind die üblichen Größen von Gepäckstücken vollständig oder nahezu vollständig auf der Auflagefläche anordenbar, ohne diese in relevantem Maße in Greiferlängsrichtung zu überragen.

Die Erfindung betrifft weiterhin auch ein Robotersystem, insbesondere zum Ergreifen, Transportieren und Ablegen von Transportgütern, insbesondere von Gepäckstücken wie Koffern und Reisetaschen, welches eine ortsfest angeordnete oder über ein Schienensystem verlagerbare Roboterbasis, einen gegenüber der Roboterbasis beweglichen Roboterarm, an dessen Ende eine Kopplungseinrichtung zur Ankopplung eines Robotergreifers vorgesehen ist, und ein Steuergerät zur Ansteuerung des Roboterarms und des Robotergreifers aufweist. Dabei ist erfindungsgemäß vorgesehen, dass an der Kopplungseinrichtung des Roboterarms ein Robotergreifer nach vorstehender Art angebracht ist.

Dieser Robotergreifer kann derart ausgebildet sein, dass er in oben beschriebener Art ein zwangskoppelndes Getriebe aufweist, welches die Bewegung der Verlagerungseinrichtung gegenüber der Greiferbasis einerseits und der Trageinrichtung gegenüber der Greiferbasis andererseits miteinander koppelt. Bei einer Gestaltung, bei der separate Antriebe für die Verlagerungseinrichtung einerseits und die Trageinrichtung andererseits vorgesehen sind, ist das Steuergerät dafür ausgebildet, diese Antriebe korrespondierend zueinander derart zu verfahren, dass sie zeitgleich in entgegengesetzte Richtung bewegt werden, um dadurch das oben beschriebene Abladen eines Transportgutes zu gestatten. Vorzugsweise ist das Steuergerät dafür ausgebildet, bei einem solchen Abladeprozess die Relativverlagerung zwischen der Verlagerungseinrichtung und einem Untergrund, auf dem das Transportgut abgeladen werden soll, gering zu halten, insbesondere eine horizontale Verlagerung der Verlagerungseinrichtung gegenüber dem Untergrund während des Abladens in horizontaler Richtung von weniger als 10 cm zu gewährleisten. Dies wird dadurch erreicht, dass gleichzeitig mit der Relativverlagerung der Verlagerungseinrichtung und der Trageinrichtung gegenüber der Greiferbasis die Greiferbasis mittels des Roboterarms in etwa in gleichem Maße bewegt wird. Das Transportgut wird somit während des Abladens gegenüber dem Untergrund horizontal kaum bewegt, so dass es nicht zu Schleifschäden am Transportgut kommen kann. Vorzugsweise ist der Robotergreifer während des Abladens in einer zu seinem distalen Ende hin abfallenden Stellung, so dass das Transportgut von der Trageinrichtung heruntergleitet, statt von ihr herunterzufallen.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung, das nachfolgend erläutert wird. Dabei zeigen:
- Fig. 1: einen erfindungsgemäßen Robotergreifer, angekoppelt an einen Roboterarm,
- Fig. 2: den Roboterarm sowie den Robotergreifer in einer seitlichen Gesamtansicht und
- Fig. 3a bis 3c: die Relativbewegung der Trageinrichtung und der Verlagerungseinrichtung des Robotergreifers in verschiedenen Stadien der Bewegung.

### Detaillierte Beschreibung des Ausführungsbeispiels

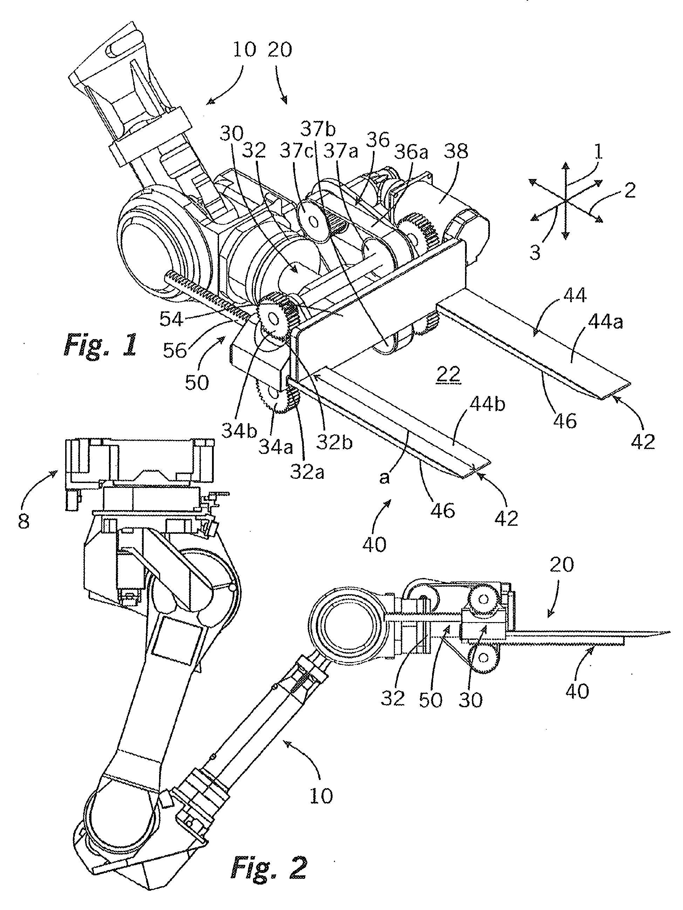

Fig. 1 zeigt einen erfindungsgemäßen Robotergreifer 20, der an einen Roboterarm 10 angekoppelt ist. Dieser Robotergreifer 20 dient dem Transport von Transportgütern, insbesondere von Gepäckstücken im Rahmen einer automatisierten Gepäckhandhabung, beispielsweise an einem Flughafen. Zu diesem Zweck weist der Robotergreifer 20 einen Aufnahmebereich 22 zur Aufnahme eines Transportgutes auf.

In Greiferhochrichtung 1 ist dieser Aufnahmebereich 22 unterseitig durch die Auflagefläche 44 einer Trageinrichtung 40 gebildet. Diese Trageinrichtung 40 verfügt über zwei sich in Greiferlängsrichtung zwei erstreckende Tragzinken 42, deren Oberseiten 44a, 44b gemeinsam die Auflagefläche 44 bilden.

In Greiferlängsrichtung dem Roboterarm 10 zugewandt ist der Aufnahmebereich 22 durch eine Kontaktfläche 54 einer Verlagerungseinrichtung 50 begrenzt.

Gegenüber einer Greiferbasis 30, an der eine Kopplungsvorrichtung 32 zur Ankopplung an den Roboterarm 10 vorgesehen ist, sind sowohl die Trageinrichtung 40 als auch die Verlagerungseinrichtung 50 in Greiferlängsrichtung 2 verfahrbar.

Zu diesem Zweck sind die Zinken 42 der Trageinrichtung 40 in Führungen 32a geführt und an den Unterseiten der Zinken 42 sind Zahnstangen 46 vorgesehen, die jeweils mit einem Antriebszahnrad 34a kämmen. In ähnlicher Weise sind beidseitig an der Verlagerungseinrichtung 50 Zahnstangen 56 vorgesehen, die sich in Richtung des Roboterarms 10 erstrecken und die in Führungen 32b der Greiferbasis 30 geführt sind. Mit diesen Zahnstangen 56 kämmen ebenfalls Antriebszahnräder 34b.

Die Antriebszahnräder 34a zum Zwecke der Verlagerung der Trageinrichtung 40 und die Antriebszahnräder 34b zur Verlagerung der Verlagerungseinrichtung 50 sind über ein Riemengetriebe 36 miteinander gekoppelt. Der Zahnriemen 36a dieses Riemengetriebes 36 umschlingt je eine mit den Antriebszahnrädern 34a und den Antriebszahnrädern 34b drehfest verbundene Zahnriemenscheibe 37a, 37b sowie ein Antriebszahnriemenscheibe 37c, welches mittels eines Elektromotors 38 angetrieben werden kann.

Dieses an der Greiferbasis 30 vorgesehene Riemengetriebe 36 bewirkt eine Zwangskopplung der Bewegung der Trageinrichtung 40 einerseits und der Verlagerungseinrichtung 50 andererseits. Abhängig von der Drehrichtung des Antriebsmotors 34 werden die Trageinrichtung 40 und die Verlagerungseinrichtung 50 stets gegenläufig und entweder derart verfahren, dass der Aufnahmebereich 22 vergrößert oder verkleinert wird.

Im Zustand der Figur 1 weist der Aufnahmebereich 22 seine maximale Größe auf. Der für das auf den Tragzinken 32 aufliegende Transportgut verfügbare Auflagebereich der Tragzinken 32 in Greiferlängsrichtung 2 hat in diesem Zustand eine Länge in Greiferlängsrichtung von etwa a = 50 cm.

Durch die Bewegbarkeit sowohl der Trageinrichtung 40 als auch der Verlagerungseinrichtung 50 gegenüber der Greiferbasis 30 bedarf es zur Verkleinerung des nutzbaren Teils des Auflagebereichs bis zu einer Länge a = 0 keiner jeweils eigenen Verlagerung der Trageinrichtung 40 bzw. der Verlagerungseinrichtung 50 gegenüber der Greiferbasis 30 um die Distanz von 50 cm. Stattdessen reicht es aus, wenn die Summe der jeweiligen Verlagerbarkeit der Trageinrichtung 40 und der Verlagerungseinrichtung 50 der Länge a entspricht. So kann beispielsweise eine Verlagerung von jeweils etwa 25 cm gegenüber der Greiferbasis 30 ausreichen. Bei verschieden großen Zahnrädern 34a, 34b oder anderen Getriebegestaltungen sind auch sich voneinander unterscheidende Verlagerungsdistanzen möglich.

Durch die jeweils reduzierte Verlagerbarkeit der Trageinrichtung und der Verlagerungseinrichtung wird eine recht kleine Bauweise des Robotergreifers 20 erreicht. Weiterhin ragen selbst in der Relativendlage der Fig. 1 und 2 die Zahnstangen 56 der Verlagerungseinrichtung 50 nur geringfügig über die den Handwurzelpunkt des Robotergreifers 30 bildende Kopplungseinrichtung 32 nach hinten hinaus in Richtung des Roboterarms 10, so dass die Freiheit der Bewegung des Roboterarms 10 durch den jeweiligen Zustand des Robotergreifers 20 kaum eingeschränkt ist.

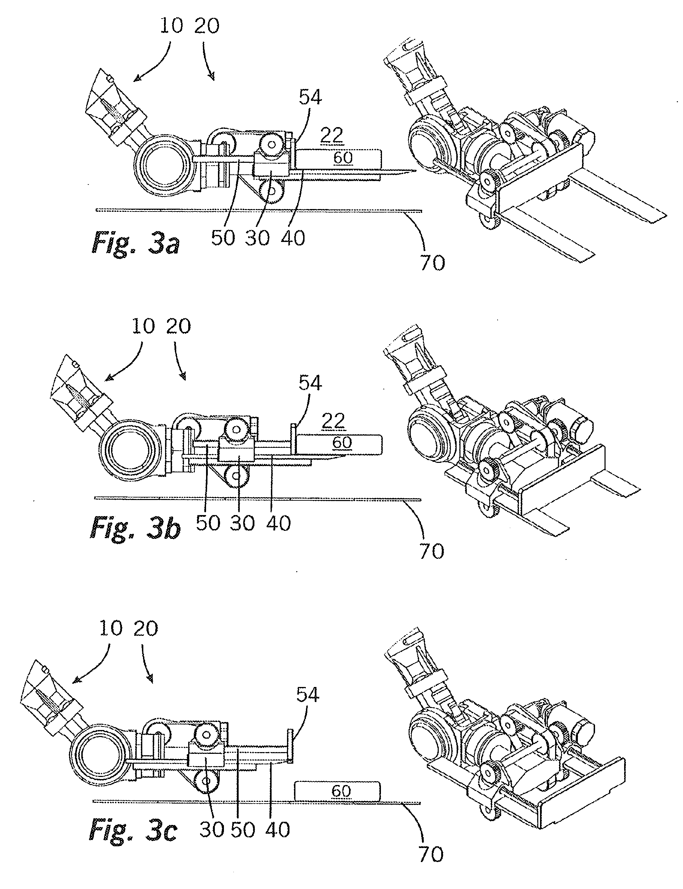

Die bereits erwähnte Fig. 2 zeigt den Robotergreifer 20 im angekoppelten Zustand an dem vollständig dargestellten Roboterarm 10. Der Roboterarm 10 ist wiederum schwenkbar angelenkt an einer Roboterbasis 8, die fest an einer Hallendecke oder einem Schienensystem gelagert sein kann. Der Roboterarm 10 erlaubt durch seine zusätzlichen Freiheitsgrade bei einem Abladen oder Aufladen eines Gepäckstücks auf den Transportbereich 22 des Robotergreifers 20 eine gezielte Platzierung des Transportgutes. Dies ist anhand der Fig. 3a bis 3c erläutert.

Die Fig. 3a bis 3c zeigen den Robotergreifer 20 jeweils in einer Seitenansicht und einer perspektivischen Ansicht in drei Stadien beim Abladen eines Transportgutes 60, welches beispielsweise einen Reisekoffer darstellen kann. Im Zustand der Fig. 3a finden sich die Trageinrichtung 40 und die Verlagerungseinrichtung 50 des Robotergreifers 20 in einer Stellung, die der der Fig. 1 entspricht. In dem in diesem Zustand maximal vergrößerten Aufnahmebereich 22 das ein Transportgut 60 angeordnet.

Um dieses auf einen Untergrund 70 ablegen zu können, wird über dem Ablageplatz mittels des Elektromotors 38 eine gleichzeitige Verlagerung der Trageinrichtung 40 und der Verlagerungseinrichtung 50 gegenüber der Greiferbasis 30 bewirkt, bei der bezugnehmend auf die Seitendarstellung der Fig. 3a bis 3c die Verlagerungseinrichtung 50 nach rechts und die Trageinrichtung 40 nach links verfahren wird. Hierdurch wird der Aufnahmebereich 22 verkleinert, so dass das Transportgut 60 immer weiter auf der Trageinrichtung 40 nach rechts verschoben wird. Gleichzeitig wird jedoch der Robotergreifer 20 in seiner Gesamtheit mittels des Roboterarms 10 nach links verlagert, so dass die Position der Kontaktfläche 54 der Verlagerungseinrichtung 50 in etwa ortsfest über dem Untergrund 70 verbleibt. Mit fortschreitender Verlagerung der Trageinrichtung 40 und der Verlagerungseinrichtung 50 gegenüber der Greiferbasis 30 wird das Transportgut 60 immer weiter von der Trageinrichtung 40 bzw. deren Tragzinken 42 heruntergeschoben, bis es von der Trageinrichtung herunterfällt und auf dem Untergrund 70 aufliegt. Relativ zum Untergrund ist der Reisekoffer dabei im Wesentlichen nur vertikal und kaum horizontal bewegt worden.

Der dargestellte Ablagevorgang ist vereinfacht dargestellt. Von Vorteil ist es, wenn dass bezogen auf die Seitendarstellung der Fig. 3a bis 3c rechtseitige Ende des Robotergreifers 20 beim Abladen nach vorne abgesenkt ist, so dass der Reisekoffer 60 nicht von der Trageinrichtung herunterfällt, sondern langsam von ihr heruntergeleitet und Bodenkontakt bereits erreicht, wenn der Schwerpunkt noch über der Trageinrichtung 40 angeordnet ist.

Der erfindungsgemäße Robotergreifer erlaubt bei vergleichsweise geringfügig Außenmaßen eine vergleichsweise große Relativverlagerung der Verlagerungseinrichtung 50 gegenüber der Trageinrichtung 40, so dass er geeignet ist, recht große Transportgüter, insbesondere auch große Reisegepäckstücke, aufzunehmen und dennoch den Aufnahmebereich 22 hinsichtlich seiner Größe, wie in Fig. 3c dargestellt ist, bis auf Null zu reduzieren.

## Patentansprüche

1. Robotergreifer (20) zum Ergreifen, Transportieren und Ablegen von Transportgütern (60), insbesondere von Gepäckstücken wie Koffern und Reisetaschen, mit
- einer Greiferbasis (30) mit einer Kopplungseinrichtung (32) zur Anbringung an einem Roboterarm (10),
- einer in einer Greiferlängsrichtung (2) erstreckten Trageinrichtung (40) mit einer Auflagefläche (44), die der Auflage des Transportgutes (60) dient und die sich im Wesentlichen in Greiferlängsrichtung (2) und einer Greiferquerrichtung (3) erstreckt,
- einer Verlagerungseinrichtung (50), die in einer Greiferhochrichtung (1) oberhalb der Trageinrichtung (40) angeordnet ist und die der Kraftbeaufschlagung des Transportgutes (60) in Greiferlängsrichtung (2) dient,
wobei
- die Verlagerungseinrichtung (50) und die Trageinrichtung (40) jeweils in Greiferlängsrichtung (2) gegenüber der Greiferbasis (30) verfahrbar sind,
**dadurch gekennzeichnet, dass**
- die Verlagerungseinrichtung (50) und die Trageinrichtung (40) dafür ausgebildet sind, zeitgleich und in entgegengesetzte Richtung gegenüber der Greiferbasis (30) verfahren zu werden, wobei hierfür ein Getriebe (36) vorgesehen ist, mittels dessen eine mechanische Zwangskoppelung zwischen der Bewegung der Verlagerungseinrichtung (50) gegenüber der Greiferbasis (30) einerseits und der Bewegung der Trageinrichtung (40) gegenüber der Greiferbasis (30) andererseits bewirkt wird.

2. Robotergreifer nach Anspruch 1,
**dadurch gekennzeichnet, dass**
das Getriebe (36) jeweils mindestens ein Antriebsrad (34b, 34a) für die Verlagerungseinrichtung (50) und die Trageinrichtung (40) aufweist, wobei die beiden Antriebsräder (34a, 34b) über einen Riementrieb (36) miteinander und/oder mit einem Antriebsmotor (38) gekoppelt sind.

3. Robotergreifer nach Anspruch 1 oder 2,
**dadurch gekennzeichnet, dass**
die Verlagerungseinrichtung (50) und die Trageinrichtung (40) in einer ersten Relativendlage soweit verfahren sind, dass ein distales Ende der Trageinrichtung (50) in Greiferlängsrichtung (2) nicht mehr als 15 cm vor einem distalen Ende der Verlagerungseinrichtung angeordnet ist, wobei vorzugsweise in dieser ersten Relativendlage die Verlagerungseinrichtung und die Trageinrichtung soweit verfahren sind, dass das distales Ende der Verlagerungseinrichtung in Greiferlängsrichtung das distale Ende der Trageinrichtung überragt.

4. Robotersystem, insbesondere zum Ergreifen, Transportieren und Ablegen von Transportgütern (60), insbesondere von Gepäckstücken wie Koffern und Reisetaschen, mit
- einer ortsfest angeordneten oder über ein Schienensystem verlagerbaren Roboterbasis (8),
- einem gegenüber der Roboterbasis (8) beweglichen Roboterarm (10), an dessen Ende eine Kopplungseinrichtung zur Ankopplung eines Robotergreifers (20) vorgesehen ist, und
- einem Steuergerät zur Ansteuerung des Roboterarms (10) und des Robotergreifers (20),
**dadurch gekennzeichnet, dass**
- an der Kopplungseinrichtung des Roboterarms (10) ein Robotergreifer (20) nach einem der vorstehenden Ansprüche angebracht ist.

## Claims

1. A robot gripper (20) for gripping, transporting, and depositing goods in transit (60), more particularly pieces of baggage such as suitcases and traveling bags, comprising
• a gripper base (30) with a coupling device (32) for attachment to a robot arm (10),
• a carrying device (40) extending in a longitudinal direction (2) of said gripper and having a carrying surface (44) serving to carry the object in transit (60) and extending substantially in the longitudinal direction (2) of said gripper and in a transverse direction (3) of said gripper,
• a displacement device (50) which is disposed in an upward vertical direction (1) of said gripper above said carrying device (40) and serves to apply force to said object in transit (60) in the longitudinal direction (2) of said gripper, wherein
• said displacement device (50) and said carrying device (40) are each capable of being moved in the longitudinal direction (2) of said gripper relative to said gripper base (30),
**characterized in that**
• said displacement device (50) and said carrying device (40) are adapted to be moved concurrently and in opposite directions relative to said gripper base (30), with a transmission (36) being provided therefor, by means of which a forced mechanical coupling is established between the movement of said displacement device (50) relative to said gripper base (30), on the one hand, and the movement of said carrying device (40) relative to said gripper base (30), on the other hand.

2. The robot gripper according to claim 1, **characterized in that**
said transmission (36) has at least one driving gearwheel (34b 34a) each for said displacement device (50) and for said carrying device (40), said two driving gearwheels (34a, 34b) being coupled via a belt transmission (36) to each other and/or to a driving motor (38).

3. The robot gripper according to claim 1 or 2, **characterized in that**
in a first relative end position, said displacement device (50) and said carrying device (40) have been moved such that a distal end of said carrying device (50) is disposed not more than 15 cm, in the longitudinal direction (2) of said gripper, beyond a distal end of said displacement device and, preferably in this first relative end position, said displacement device and said carrying device have been moved to an extent such that the distal end of said displacement device protrudes, in the longitudinal direction of said gripper, beyond the distal end of said carrying device.

4. A robot system, particularly adapted to grasp, transport, and deposit goods in transit (60), more particularly pieces of baggage such as suitcases and traveling bags, comprising
• a robot base (8), which is stationary or is displaceable via a system of rails,
• a robot arm (10), which is movable relative to said robot base (8), a coupling device for coupling a robot gripper (20) being provided at the end of said robot arm, and
• a controlling device for controlling said robot arm (10) and said robot gripper (20),
**characterized in that**
• to the coupling device of said robot arm (10), there is attached a robot gripper (20) according to any of the preceding claims.

## Revendications

1. Préhenseur pour robot (20) destiné à saisir, transporter et déposer des articles à transporter (60), en particulier des bagages tels que des valises et des sacs de voyage, comprenant
- une base de préhenseur (30) avec un dispositif d'accouplement (32) pour le montage sur un bras de robot (10),
- un dispositif porteur (40) s'étendant dans une direction longitudinale du préhenseur (2), avec une surface d'appui (44) qui sert à l'appui de l'article à transporter (60) et qui s'étend essentiellement dans la direction longitudinale du préhenseur (2) et dans une direction transversale au préhenseur (3),
- un dispositif de décalage (50) qui est disposé dans une direction verticale du préhenseur (1) au-dessus du dispositif porteur (40) et qui sert à solliciter avec une force l'article à transporter (60) dans la direction longitudinale du préhenseur (2),
- le dispositif de décalage (50) et le dispositif porteur (40) étant déplaçables à chaque fois dans la direction longitudinale du préhenseur (2) par rapport à la base de préhenseur (30),
**caractérisé en ce que**
- le dispositif de décalage (50) et le dispositif porteur (40) sont réalisés de manière à être déplacés simultanément et dans la direction opposée par rapport à la base de préhenseur (30), une transmission (36) étant prévue à cet effet, au moyen de laquelle un accouplement forcé mécanique entre le mouvement du dispositif de décalage (50) par rapport à la base de préhenseur (30) d'une part et le mouvement du dispositif porteur (40) par rapport à la base de préhenseur (30) d'autre part est effectué.

2. Préhenseur pour robot selon la revendication 1,
**caractérisé en ce que**
la transmission (36) présente à chaque fois au moins une roue d'entraînement (34b, 34a) pour le dispositif de décalage (50) et le dispositif porteur (40), les deux roues d'entraînement (34a, 34b) étant accouplées l'une à l'autre par le biais d'un entraînement à courroie (36) et/ou à un moteur d'entraînement (38).

3. Préhenseur pour robot selon la revendication 1 ou 2, **caractérisé en ce que**
le dispositif de décalage (50) et le dispositif porteur (40) sont déplacés dans une première position d'extrémité relative dans une mesure telle qu'une extrémité distale du dispositif porteur (50) dans la direction longitudinale du préhenseur (2) ne soit pas disposée à plus de 15 cm devant une extrémité distale du dispositif de décalage, de préférence dans cette première position d'extrémité relative, le dispositif de décalage et le dispositif porteur étant déplacés dans une mesure telle que l'extrémité distale du dispositif de décalage dépasse dans la direction longitudinale du préhenseur l'extrémité distale du dispositif porteur.

4. Système de robot, en particulier pour saisir, transporter et déposer des articles à transporter (60), en particulier des bagages tels que des valises et des sacs de voyage, comprenant
- une base de robot (8) disposée fixement ou déplaçable sur un système de rails,
- un bras de robot (10) déplaçable par rapport à la base de robot (8), à l'extrémité duquel est prévu un dispositif d'accouplement pour l'accouplement d'un préhenseur pour robot (20), et
- un appareil de commande pour commander le bras de robot (10) et le préhenseur pour robot (20),
**caractérisé en ce que**
- sur le dispositif d'accouplement du bras de robot (10) est monté un préhenseur pour robot (20) selon l'une quelconque des revendications précédentes.
